# EUROPEAN PATENT APPLICATION

(11) **EP 4 195 757 A1**
(43) Date of publication of application: **14.06.2023**
(21) Application number: 20947839.5
(22) Date of filing: 04.08.2020
(51) Int. Cl.: H04W 24/10, H04W 36/08, H04W 72/04

(54) **TERMINAL**

(71) Applicant: NTT DOCOMO, INC., Tokyo 100-6150 (JP)
(72) Inventor: TAKAHASHI Hideaki, Tokyo 100-6150 (JP); MIN Tianyang, Tokyo 100-6150 (JP)
(74) Representative: Hoffmann Eitle
(86) International application number: PCT/JP2020/029894
(87) International publication number: WO 2022/029901

(57) **Abstract**

The terminal comprises: a control unit that sets an information element indicating quality information about a second cell group as a variable, when a link failure of any one of a first cell group and a second cell group occurs and transmission to the first cell group and the second cell group are not possible in a dual connectivity using the first cell group and the second cell group; and a transmission unit that transmits a message including the information element set as the variable to the network.

## Description

### [Technical Field]

The disclosure relates to a terminal transmitting a message regarding failures.

### [Background Art]

The 3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

The 3 GPP Release 16 introduces procedures for Release 15 and earlier specifications, such as Conditional Handover (sometimes referred to as CHO), Master Cell Group (MCG) Recovery in Dual Connectivity, and Dual Active Protocol Stack (DAPS) Handover. The CHO is a procedure that achieves handover from the source cell to the target cell without transmitting a reestablishment request message to the network for the target cell. The MCG Recovery is a procedure to reconfigure the MCG in the event of an MCG link failure by transmitting MCGFailureInformation to the SCG (Secondary Cell Group). DAPS Handover is a handover procedure performed while maintaining a link in the source cell.

### [Citation List]

### [Non-Patent Literature]

Non-Patent Literature 1: 3GPP TS36.331 V 16.1.0, 3rd Generation Partnership Project; Technical Specification Group Radio Access Network; NR; Radio Resource Control (RRC) protocol specification (Release 16), 3 GPP, July 2020

### [Summary of Invention]

Incidentally, for purposes such as SON (Self Organizing Network) and MDT (Minimization of Drive Test), it is desirable to collect messages about the failure of the link between the network and the UE (User Equipment).

As a result of diligent study, the inventors found that there were cases in which messages about failures were not properly transmitted to the network in the above-mentioned procedures such as CHO, MCG Recovery and DAPS Handover.

Therefore, the following disclosure has been made in view of this situation, and the purpose of the disclosure is to provide a terminal that can properly transmit messages regarding failures to the network.

One aspect of the disclosure is a terminal comprising: a control unit that sets cell identification information of a target cell as a variable when a reconfiguration procedure of the target cell is performed in conditional reconfiguration; and a transmission unit that transmits a message including the cell identification information set as the variable to the network.

One aspect of the disclosure is a terminal comprising: a control unit that sets, as a variable, an information element identifying whether or not a recovery procedure of a first cell group using a second cell group has been configured, when a link failure of the first cell group occurs in a dual connectivity using the first cell group and the second cell group; and a transmission unit that transmits a message including the information element set as the variable to the network.

One aspect of the disclosure is a terminal comprising: a control unit that sets an information element indicating the failure type as a variable, when a synchronization failure of a second cell group occurs and transmission to a first cell group is stopped in a dual connectivity using the first cell group and the second cell group; and a transmission unit that transmits a message including the information element set as the variable to the network.

One aspect of the disclosure is a terminal comprising: a control unit that sets an information element indicating quality information about a second cell group as a variable, when a link failure of any one of a first cell group and a second cell group occurs and transmission to the first cell group and the second cell group are not possible in a dual connectivity using the first cell group and the second cell group; and a transmission unit that transmits a message including the information element set as the variable to the network.

One aspect of the disclosure is a terminal comprising: a control unit that sets an information element indicating a link failure in a specific handover as a variable, when the link failure in the specific handover occurs in the specific handover from a source cell to a target cell; a transmission unit that transmits a message including the information element set as the variable to the network; and the specific handover is a handover performed while the link of the source cell is maintained.

One aspect of the disclosure is a terminal comprising: a control unit that sets identification information related to a non-public mobile communication network as a variable when a connection failure occurs in a cell included in the non-public mobile communication network; and a transmission unit that transmits a message including the identification information set as the variable to the network.

### [Brief Description of Drawings]

Fig. 1: Fig. 1 is an overall schematic diagram of radio communication system 10.
Fig. 2: Fig. 2 is a functional block diagram of the UE 200.
Fig. 3: Fig. 3 is a diagram showing an example of the operation of radio communication system 10.
Fig. 4: Fig. 4 is a diagram showing an example operation of radio communication system 10.
Fig. 5: Fig. 5 is a diagram showing an example operation of radio communication system 10.
Fig. 6: Fig. 6 is a diagram showing an example operation of radio communication system 10.
Fig. 7: Fig. 7 is a diagram showing an example of the operation of radio communication system 10.
Fig. 8: Fig. 8 is a diagram showing an example operation of radio communication system 10.
Fig. 9: Fig. 9 is a diagram showing an example of a UEInformation Request (ASN-1 format).
Fig. 10: Fig. 10 is a diagram showing an example of the UEInformation Response (ASN-1 format).
Fig. 11: Fig. 11 is a diagram showing an example of the hardware configuration of the UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

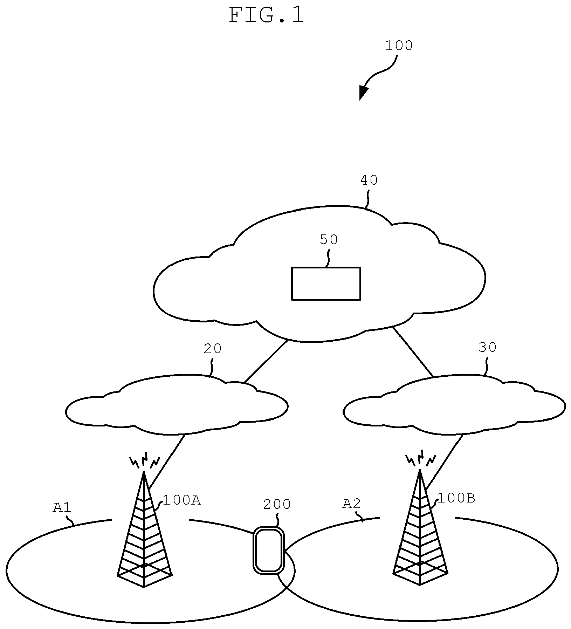

Fig. 1 is an overall schematic diagram of a radio communication system 10 according to the present embodiment. The radio communication system 10 is radio communication system according to Long Term Evolution (LTE) and 5G New Radio (NR). Note that LTE may be called 4G and NR may be called 5G.

Also, LTE and NR may be interpreted as radio access technology (RAT), and in this embodiment, LTE may be referred to as the first radio access technology and NR may be referred to as the second radio access technology.

The radio communication system 10 includes the Evolved Universal Terrestrial Radio Access Network 20 (hereinafter E-UTRAN 20), and the Next Generation-Radio Access Network 30 (Below, NG RAN 30). radio communication system 10 also includes terminal 200 (hereinafter, UE 200, User Equipment).

The E-UTRAN 20 includes an eNB 100A, a radio base station in accordance with LTE. NG RAN 30 includes gNB 100B, a radio base station in accordance with 5G (NR).

The eNB 100A, the gNB 100B and the UE 200 can support carrier aggregation (CA) using multiple component carriers (CC) and dual connectivity (DC) that simultaneously communicates between the UE and each of multiple NG-RAN nodes.

The E-UTRAN 20 is connected to a core network 40 for LTE. Note that E-UTRAN 20, NG RAN 30 and core network 40 may be simply referred to as network 120.

A management server 50 (OAM Server 50 below; Operation Administration and Management server) may be provided in the core network 40. The OAM server 50 may perform operations related to SON (Self Organizing Network), MDT (Minimization of Drive Test), etc.

The eNB 100A and the gNB 100B may form an area (which may be described as a cell) where radio communication with the UE 200 is feasible, specifically, area A1 or area A2.

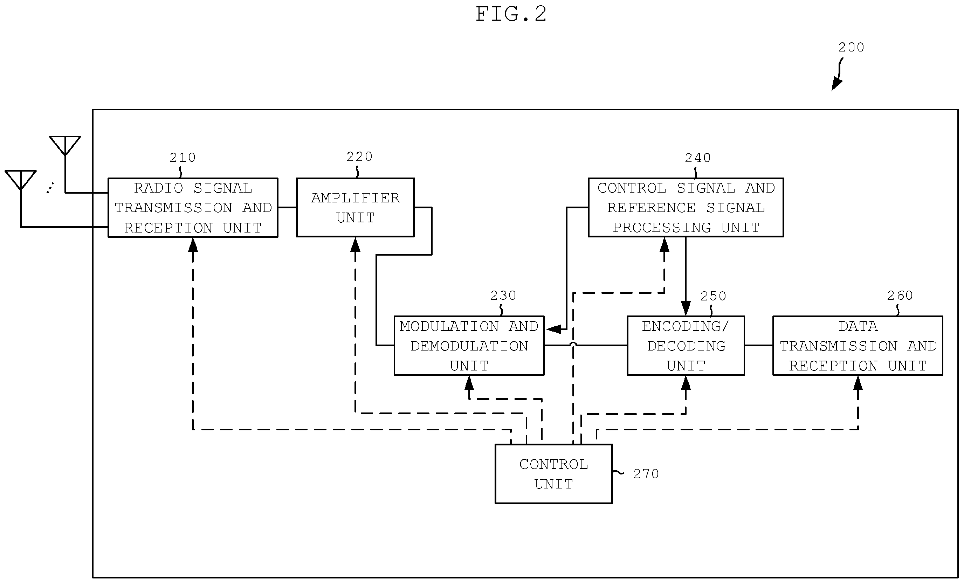

Here, area A1 may be interpreted as the area where the UE 200 can communicate with the eNB 100A. Area A2 may be interpreted as the area where the UE 200 can communicate with the gNB 100B. The areas A1 and A2 may overlap each other, and in areas where areas A1 and A2 overlap, EN-DC (EUTRA-NR Dual Connectivity) or NE-DC (NR-EUTRA Dual Connectivity) may be performed in which the UE 200 communicates simultaneously with the eNB 100A and gNB 100B. While Fig. 2 illustrates a case where the base station capable of communicating with the UE 200 in area A1 is the eNB 100A, the base station capable of communicating with the UE 200 in area A1 may be gNB 100B provided in the NG RAN 30. In such a case, the NR-DC (NR-NR Dual Connectivity) may be performed in which the UE 200 communicates simultaneously with 2 or more gNB 100B (or cells).

Here, in the DC described above, the group of cells capable of executing processing related to the C-plane (control plane) and the U-plane (user plane) is defined as the first cell group (MCG; Master Cell Group). In the DC described above, the group of cells capable of performing processing on the U-plane (user plane) is defined as the second cell group (SCG; Secondary Cell Group). For example, in the above EN-DC, the eNB 100A may be called MN (Master Node) and gNB 100B may be called SN (Secondary Node). In the NE-DC described above, the eNB 100A may be called SN and gNB 100B may be called MN.

### (2)Function block configuration of radio communication system

Next, the functional block configuration of radio communication system 10 will be described. Specifically, the functional block configuration of the UE 200 will be described.

Fig. 2 is a functional block diagram of the UE 200. As shown in Fig. 2, the UE 200 comprises a radio signal transmission and reception unit 210, an amplifier unit 220, a modulation and demodulation unit 230, a control signal and a reference signal processing unit 240, an encoding/decoding unit 250, a data transmission and reception unit 260 and a control unit 270.

The radio signal transmission and reception unit 210 transmits and receives radio signals in accordance with LTE or NR. The radio signal transmission and reception unit 210 supports Massive MIMO, CA and DC that bundle multiple CCs together.

The amplifier unit 220 will consist of a Power Amplifier (PA), a Low Noise Amplifier (LNA) and other components. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting and resource block allocation for each predetermined communication destination (eNB 100A or gNB 100B). For the modulation and demodulation unit 230, Cyclic Prefix-Orthologous Frequency Division Multiplexing (CP-OFDM)/Discrete Fourier Transform-Spread (DFT-S-OFDM) may be applied. DFT-S-OFDM may also be used for downlink (DL) as well as uplink (UL).

The control signal and reference signal processing unit 240 performs processing for various control signals transmitted and received by the UE 200 and processing for various reference signals transmitted and received by the UE 200.

Specifically, the control signal and reference signal processing unit 240 receives various control signals transmitted from the eNB 100A or gNB 100B via a predetermined control channel, such as control signals of a radio resource control layer (RRC). The control signal and the reference signal processing unit 240 also transmits various control signals to the eNB 100A or gNB 100B via a predetermined control channel.

The control signal and reference signal processing unit 240 performs processing using a reference signal (RS) such as a Demodulation Reference Signal (DMRS) and a Phase Tracking Reference Signal (PTRS).

The DMRS is a known reference signal (pilot signal) between individual base stations and terminals for estimating the fading channel used for data demodulation. PTRS is a terminal-specific reference signal for the purpose of estimating phase noise, which is a problem in high frequency bands.

In addition to the DMRS and the PTRS, the reference signal may include Channel State Information-Reference Signal (CSI-RS), Sounding Reference Signal (SRS), and Positioning Reference Signal (PRS) for location information.

The channel also includes a control channel and a data channel. Control channels include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), and Physical Broadcast Channel (PBCH).

The data channels include PDSCH (Physical Downlink Shared Channel) and PUSCH (Physical Uplink Shared Channel). Data means data transmitted over a data channel. Data channels may be read as shared channels.

Here, the control signal and reference signal processing unit 240 receives downlink control information (DCI). DCI includes fields to store the existing fields, such as DCI Formats, Carrier indicator (CI), BWP indicator, Frequency Domain Resource Allocation (FDRA), Time Domain Resource Allocation (TDRA), Modulation and Coding Scheme (MCS), HARQ Process Number (HPN), New Data Indicator (NDI), and Redundancy Version (RV).

The value stored in the DCI Format field is the information element that specifies the format of the DCI. The value stored in the CI field is an information element that specifies the CC to which the DCI applies. The value stored in the BWP indicator field is an information element that specifies the BWP to which the DCI applies. The BWP that can be specified by the BWP indicator is set by the information element (BandwidtPart-Config) included in the RRC message. The value stored in the FDRA field is an information element that specifies the frequency domain resource to which the DCI applies. Frequency domain resources are identified by the value stored in the FDRA field and the information element (RA Type) included in the RRC message. The value stored in the TDRA field is an information element that specifies the time domain resource to which the DCI applies. The time domain resource is identified by the value stored in the TDRA field and the information element (pdsch-TimeDomainAllocationList) included in the RRC message. Time domain resources may be identified by values stored in TDRA fields and default tables. The value stored in the MCS field is an information element that specifies the MCS to which the DCI applies. The MCS is identified by the values stored in the MCS and the MCS table. MCS tables may be specified by RRC messages or identified by RNTI scrambling. The value stored in the HPN field is an information element that specifies the HARQ Process to which the DCI applies. The value stored in the NDI is an information element for identifying whether the data to which the DCI is applied is first-time data. The value stored in the RV field is the information element that specifies the redundancy of the data to which the DCI applies.

In an embodiment, the control signal and reference signal processing unit 240 constitutes a transmission unit that transmits a message including information elements set as variables. Variable is the variable on which the information element about the connection failure is set. The variable may be referred to as VarRLF-Report. The variable may be referred to as the rlf-Report included in the VarRLF-Report. A connection failure can be caused by a radio link failure (RLF; Radio Link Failure). Connection failures may include a handover failure (HO Failure). Connection failures may include RACH (Random Access Channel) failures. Messages including rlf-Report may be RRC messages. A message including an rlf-Report may include a UEInformationResponse sent in response to a UEInformationRequest. The message including the rlf-Report may include the RRC Reconfiguration Complete message used in the RRC reconfiguration procedure.

The encoding/decoding unit 250 performs data division/concatenation and channel coding/decoding for each predetermined communication destination (eNB 100A or gNB 100B).

Specifically, the encoding/decoding unit 250 divides the data output from the data transmission and reception unit 260 into predetermined sizes and performs channel coding on the divided data. The encoding/decoding unit 250 decodes the data output from the modulation and the demodulation unit 230 and concatenates the decoded data.

The data transmission and reception unit 260 transmits and receives Protocol Data Units (PDU) and Service Data Units (SDU). Specifically, the data transmission and reception unit 260 performs such tasks as assembling/disassembling PDUs/SDUs in multiple layers (Media access control layer (MAC), radio link control layer (RLC), and packet data convergence protocol layer (PDCP), etc.). The data transmission and reception unit 260 also performs error correction and retransmission control of data based on hybrid automatic repeat requests (ARQs).

The control unit 270 controls each functional block comprising the UE 200. In an embodiment, the control unit 270 constitutes a control unit that sets information elements about a connection failure as variables when a connection failure occurs. As mentioned above, the variable may be referred to as VarRLF-Report or rlf-Report. In particular, the following connection failure cases are described in the embodiment.

### (2.1) Conditional reconfiguration

The Conditional reconfiguration (Below, CHO) is described below. The CHO is a procedure for implementing handover from the source cell to the target cell without transmitting an RRC re-establishment request for the target cell to the network 300. In the conventional technique, when an RLF occurs in a CHO, there is no opportunity to transmit a message about the RLF because the RRC re-establishment request is not sent. Here, based on such findings, the control unit 270 performs the actions described below.

The control unit 270 sets the identification information of the target cell as a variable when the target cell reconfiguration procedure (RRC reconfiguration procedure) is performed in the CHO. More specifically, the control unit 270 may set target cell identification as a variable in the event of HO failure in the CHO. The variable may be referred to as the reestablishmentCellId included in the VarRLF-Report. The variable may be one that can identify that RRC reconfiguration has been applied in the CHO. In such cases, the variable may be referred to as the reestablishmentCellId CHO.

For example, on receipt of an RRC Reconfiguration message or execution of a conditional reconfiguration, if an RRC reconfiguration for execution of a conditional reconfiguration is applied in a cell selection while T311 is activated, the control unit 270 sets the identification information of the selected cell in the reestablishmentCellId (or reestablishmentCellId CHO) included in the VarRLF-Report. The selected cell may be thought of as the target cell selected in the cell selection (For example, CHO) of the RRC reconfiguration. The selected cell may be considered as the target cell where HO failure occurred in the CHO. The identity of the selected cell may be GCI (Global Cell Identity). Note that T311 is a timer that is activated in response to the start of the RRC Reestablishment Procedure. The RRC Reestablishment Procedure is a procedure performed in the event of HO failure in a CHO.

Here, the UE 200 may include in the UEInformationResponse an information element set to reestablishmentCellId (or reestablishmentCellId CHO) when explicitly requested by the UEInformation Request from the network 300. In such cases, the UEInformationRequest may include an information element (For example, cHOFailureReestablishment Report) that requests an information element set to reestablishmentCellId (or reestablishmentCellId CHO). The UE 200 may autonomously include in the UEInformationResponse an information element set to reestablishmentCellId (or reestablishmentCellId CHO) without being explicitly requested by the UEInformation Request.

With such a configuration, the RLF can be reported to the network 300 even when the RLF occurs in the CHO.

### (2.2)MCG Recovery

In the following, we describe the operation assuming a case in which MCG Recovery is executed when an MCG link failure occurs in a DC. MCG Recovery is a procedure to reconfigure the MCG by transmitting MCGFailureInformation to the SCG in the event of an MCG RLF. In the prior art, in MCG Recovery, there was no opportunity to transmit a message about the RLF because the RRC re-establishment request was not sent. Here, based on such findings, the control unit 270 performs the actions described below.

In the event of an MCG Failure in a DC, the control unit 270 sets as a variable an information element that is configured to identify whether or not an MCG Recovery Procedure using an SCG has been set. Whether or not MCG Recovery is set may be read as whether or not T316 is set. T316 is a timer activated by transmitting MCGFailureInformation. In other words, T316 is a timer that measures the time allowed for MCG Recovery. The variable may be referred to as T316 Configured, which is included in the VarRLF-Report. The information element indicating the failure type may be represented by the presence or absence of an information element (true) indicating that T316 is set.

With such a configuration, it is possible to distinguish (A) RLF caused by MCG Failure that occurs in UE 200 (UE 200 for which T316 is not set) for which MCG Recovery is not set from (B) RLF caused by MCG Failure that occurs in UE 200 (UE 200 for which T316 is set) for which MCG Recovery is set.

Here, the UE 200 may include information elements set to T316 Configured in the UEInformationResponse when explicitly requested by the UEInformationRequest from the network 300. In such cases, the UEInformationRequest may include an information element (T316 ConfiguredReport) requesting an information element set to T316 Configured. The UE 200 may autonomously include information elements set to T316 Configured in the UEInformationResponse without being explicitly requested by the UEInformationRequest.

### (2.3)SCG Sync Failure

The following is an explanation of the operation assuming a case of SCG Sync Failure in DC. Previous techniques have not been able to identify the RLF that occurs when an SCG Sync Failure has occurred and transmission to the MCG has been stopped. Here, based on such findings, the control unit 270 performs the actions described below.

The control unit 270 sets an information element indicating the failure type as a variable when an SCG Sync Failure has occurred in the DC and transmission to the MCG has been stopped. The failure type may be called connectionFailureType. The information element indicating the failure type may be called reconfigureWithSyncFailureSCG.

For example, the control unit 270 sets reconfigureWithSyncFailureSCG to VarRLF-Report when T304 of the SCG has expired and transmission to the MCG has stopped. reconfigureWithSyncFailureSCG may be set to connectionFailureType included in the VarRLF-Report. T304 may be a timer that starts in response to the receipt of an RRC Connection Reconfiguration message or the like. T304 may be a timer that measures the time allowed to change the cells included in the MCG or SCG. T304 may be a timer that is activated when the UE 200 performs conditional handover execution in the CHO. T304 may be a timer that measures the time allowed for conditional handover execution in a CHO.

In addition, the control unit 270 may set reconfigureWithSyncFailureSCG to VarRLF-Report in a manner that identifies the RAN of the SCG. Specifically, the control unit 270 may set SCGFailureInformation in the variable indicating EN-DC (nr-SCGFailureInfoNR) when the above situation occurs in EN-DC. The control unit 270 may set SCGFailureInformation in the variable indicating NR-DC (nr-SCGFailureInfo) when the above situation occurs in NR-DC. The control unit 270 may set SCGFailureInformation in the variable indicating EN-DC (eutra-SCGFailureInfo) when the above situation occurs in NE-DC. nr-SCGFailureInfoNR, nr-SCGFailureInfo, and eutra-SCGFailureInfoNR may be considered as examples of variables that can be included in the VarRLF-Report. nr-SCGFailureInfoNR, nr-SCGFailureInfo, and eutra-SCGFailureInfoNR may be different variables from connectionFailureType.

SCGFailureInformation may include a measResultFrequencyList. The measResultFrequencyList includes the measurement results of the frequencies set on the UE 200 to be measured by the measurement configuration (measConfig). SCGFailureInformation may include measResultSCG-Failure. measResultSCG-Failure includes the measurement results of the frequency set on the UE 200 as measured by the RRC reconfiguration procedure.

With such a configuration, it is possible to distinguish (A) the RLF caused by the handover failure (expiration of T304 of the MCG) from (B) the RLF caused by the expiration of T304 of the SCG and the stop of transmission to the MCG.

### (2.4) SCG Quality Information

Quality information reporting for SCG is described below. Conventional technology does not specify procedures for reporting quality information about SCGs when the following cases occur in DC, and quality information about SCGs cannot be reported. The above cases are (A) SCG Failure (expiration of T310 of the SCG) and transmission to the MCG is not possible, and (B) MCG Failure (expiration of T310 of the MCG) and transmission to the SCG is not possible. Cases in which transmission to the MCG is not possible include cases in which transmission to the MCG is stopped. Cases in which transmission to the SCG is not possible may include cases in which transmission to the SCG is stopped or in the process of changing the PSCell (Primary Secondary Cell). Here, based on such findings, the control unit 270 performs the actions described below.

The control unit 270 sets an information element indicating quality information about the SCG as a variable when either the MCG or the SCG has a link failure in the DC and transmission to the MCG and the SCG is not possible.

For example, the control unit 270 may set an information element (SCGFailureInformation) to sCGFailureInfo to indicate quality information about an SCG when T310 of the SCG has expired and transmission to the MCG has been stopped. sCGFailureInfo is an example of a variable that can be included in a VarRLF-Report. As mentioned above, SCGFailureInformation may include measResultSCG-Failure or measResultSCG-Failure.

In addition, the control unit 270 may set SCGFailureInformation to VarRLF-Report in a manner that identifies the RAN of the SCG. Specifically, the control unit 270 may set SCGFailureInformation in the variable indicating EN-DC (nr-SCGFailureInfoNR) when the above situation occurs in EN-DC. The control unit 270 may set SCGFailureInformation in the variable indicating NR-DC (nr-SCGFailureInfo) when the above situation occurs in NR-DC. The control unit 270 may set SCGFailureInformation in the variable indicating EN-DC (eutra-SCGFailureInfo) when the above situation occurs in NE-DC. nr-SCGFailureInfoNR, nr-SCGFailureInfo, and eutra-SCGFailureInfoNR may be considered as examples of variables that can be included in the VarRLF-Report.

For example, the control unit 270 may set an information element (measResultSCG) to mCGFailureInfo that indicates quality information about an SCG when T310 of the MCG has expired and transmission to the SCG has been stopped. mCGFailureInfo is an example of a variable that can be included in a VarRLF-Report. measResultSCG, like SCGFailureInformation, may include measResultSCG-Failure or measResultSCG-Failure. measResultSCG may be included in MCGFailureInformation.

In addition, the control unit 270 may set MCGFailureInformation to VarRLF-Report in a manner that identifies the RAN of the MCG. Specifically, the control unit 270 may set MCGFailureInformation in the variable indicating EN-DC (eutra-MCGFailureInfo) when the above situation occurs in EN-DC. The control unit 270 may set MCGFailureInformation in the variable indicating NR-DC or NE-DC (nr-MCGFailureInfo) when the above situation occurs in NR-DC or NE-DC. MCGFailureInformation includes an information element (measResultSCG) that indicates quality information about the SCG. eutra-MCGFailureInfo and nr-MCGFailureInfo may be considered as examples of variables that can be included in the VarRLF-Report.

With this configuration, quality information about SCGs can be reported even in cases such as (A) or (B) above.

### (2.5) DAPS Handover

The Dual Active Protocol Stack (DAPS) handover is described below. DAPS Handover is an example of a specific handover from a source cell to a target cell and is a handover performed while maintaining a link to the source cell. In the prior art, the RLF of the source cell (below, source PCell; Primary Cell) was not considered, and there was no opportunity to transmit a message about the RLF of the source PCell. Here, based on such findings, the control unit 270 performs the actions described below.

The control unit 270 sets an information element indicating a link failure in DAPS as a variable in the event of a link failure (RLF) in the source PCell in DAPS.

For example, the control unit 270 may set the source PCell identification to VarRLF-Report in the event of a link failure (RLF) of the source PCell in DAPS. The variable in which the identity of the source PCell is set may be called failedPSCellId. The identity of the source PCell may include cellGlobalId. The identity of the source PCell may include a PCI (Physical Cell ID) or an ARFCN (Absolute Radio Frequency Channel Number). In addition, the control unit 270 may set the quality information of the source PCell or the location information of the UE 200 to VarRLF-Report in the event of a link failure (RLF) of the source PCell in the DAPS.

With this configuration, even if the RLF of the source PCell occurs in DAPS, the RLF of the source PCell can be reported.

Here, the identity of the source PCell may be included in the UEInformationResponse sent in response to the UEInformationRequest. A UE 200 may include the identity of the source PCell in its UEInformationResponse when explicitly requested by a UEInformationRequest from network 300. The UE 200 may autonomously include the identity of the source PCell in the UEInformationResponse without being explicitly requested by the UEInformationRequest. In addition, the source PCell identification information may be included in the RRC Reconfiguration Complete message used in the RRC reconfiguration procedure.

### (2.6) NPN connectivity failure

The following describes a case in which a connection failure occurred in a cell included in a non-public communication network (Below: NPN; Non-Public Network). Previous techniques have not considered collecting messages about connection failures in such cases. Here, based on such findings, the control unit 270 performs the actions described below.

The control unit 270 sets identification information about the NPN as a variable in the event of connection failure of a cell included in the NPN. NPNs may include stand-alone NPNs (SNPN) operated by operators of NPNs, or may include NPNs deployed by support of PLMNs, which may be referred to as PNI-NPNs (Public Network Integrated NPNs). Connectivity failures may include radio link failures (RLF) or failures in RACH procedures (RACH Failure). The identification information about the NPN may be the identification information of the NPN (For example, NPN-Identity). The identification information about the NPN may include the identification information of the cell included in the NPN. For example, if the NPN is SNPN, the identification information about the NPN may be NID (Network Identity), and if the NPN is PNI-NPN, the identification information about the NPN may be CAG-ID (Closed Access Group Identity).

With such a configuration, it is possible to collect information on NPN connection failures and to operate the SON or MDT appropriately.

### (3)Operation of radio communication system

Here's how radio communication system 10 works. In the following, the operation of radio communication system 10 is explained by dividing into the application scenes described above.

### (3.1) Conditional reconfiguration

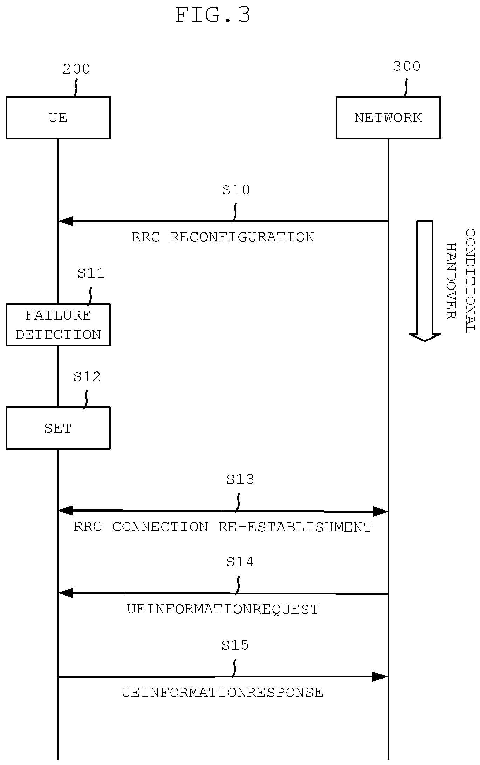

The above CHO will be described below with reference to Fig. 3. In Fig. 3, the network 300 may be NG RAN 30.

As shown in Fig. 3, in step S10, the UE 200 receives an RRC Reconfiguration message from the network 300. The RRC Reconfiguration message may include an information element for executing the CHO. The UE 200 may start the CHO by activating T311 in response to receiving the RRC Reconfiguration message.

In step S11, the UE 200 detects HO failure in the CHO.

In step S12, the UE 200 sets the identification information of the target cell as a variable. The UE 200 may set the identification of the target cell as a variable when the T311 is activated. The variable may be reestablishing CellId or reestablishing CellId CHO.

In step S13, the UE 200 executes an RRC connection re-establishment with the network 300 to set up new cells and connections.

In step S14, the UE 200 receives a UEInformationRequest from the network 300. The UEInformationRequest may include an information element (reestablishing CellId or reestablishing CellId CHO) that explicitly requests the identity of the target cell.

In step S15, the UE 200 transmits the UEInformationResponse to the network 300. The UEInformationResponse includes the identification (Information element set to reestablishmentCellId or reestablishmentCellId CHO) of the target cell.

### (3.2)MCG Recovery

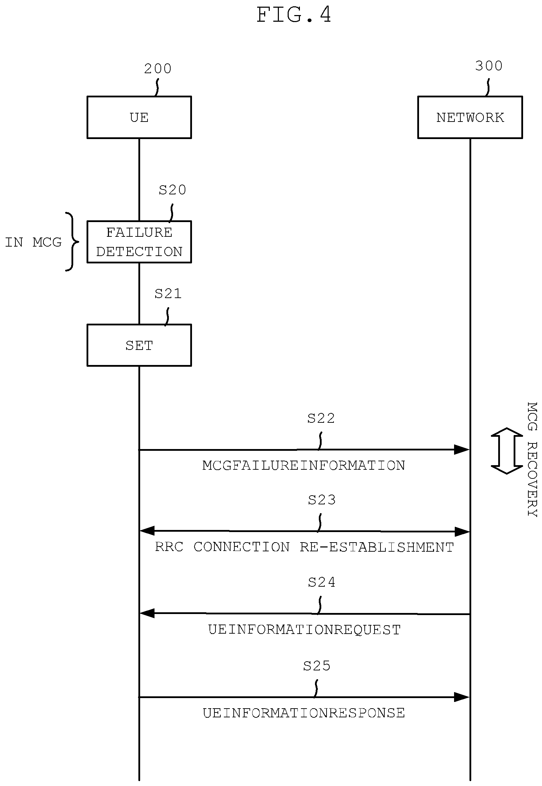

The MCG Recovery described above is described below. In Fig. 4, the network 300 may be NG RAN 30.

As shown in Fig. 4, in step S20, the UE 200 detects MCG Failure.

In step S21, the UE 200 sets as a variable an information element configured so that it can identify whether or not an MCG recovery procedure (MCG Recovery) using the SCG is set. We will continue with this description assuming that MCG Recovery is configured. The variable may be T316 ConfiguredReport.

In step S22, the UE 200 performs MCG Recovery. Specifically, the UE 200 transmits MCGFailureInformation to the SCG. We will continue to describe the MCG as not recovered by MCG Recovery.

In step S23, the UE 200 executes an RRC connection re-establishment with the network 300 to set up new cells and connections.

In step S24, the UE 200 receives a UEInformationRequest from the network 300. The UEInformationRequest may include an information element (T316 ConfiguredReport) that explicitly requests an information element that indicates whether MCG Recovery is configured.

In step S25, the UE 200 transmits the UEInformationResponse to the network 300. The UEInformationResponse includes an information element (T316 ConfiguredReport) that is configured to identify whether MCG Recovery has been set.

### (3.3)SCG Sync Failure

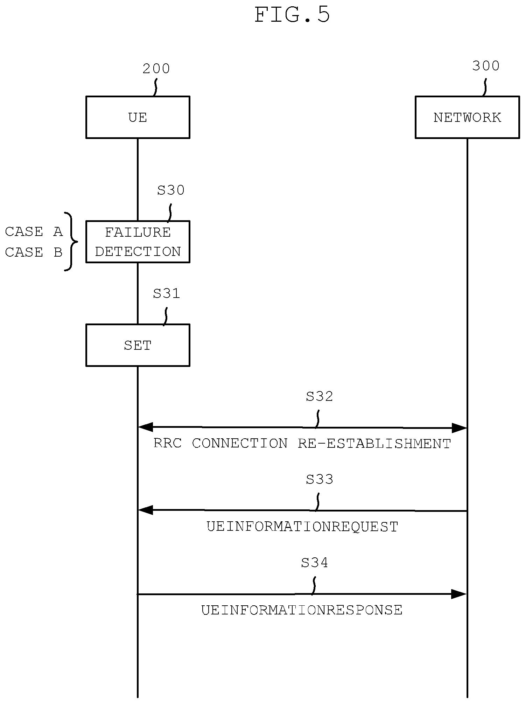

The SCG Sync Failure described above will be described below. In Fig. 5, the network 300 may be NG RAN 30 or E-UTRAN 20.

As shown in Fig. 5, in step S30, the UE 200 detects the RLF in the DC. Possible factors for RLF are (A) handover failure (expiration of T304 of MCG) and (B) expiration of T304 of SCG and transmission to MCG stopped. Herein, the explanation continues by assuming that the factor of RLF is (B).

In step S31, the UE 200 sets an information element indicating the failure type as a variable. The information element indicating the failure type is an information element to distinguish from the factor of (A), and includes the information element indicating the factor of (B).

In step S32, the UE 200 executes an RRC connection re-establishment with the network 300 to set up new cells and connections.

In step S33, the UE 200 receives a UEInformationRequest from the network 300. The UEInformationRequest may include an information element that explicitly requests the failure type of the RLF.

In step S34, the UE 200 transmits the UEInformationResponse to the network 300. The UEInformationResponse includes an information element (where reconfigureWithSyncFailureSCG) indicating the failure type. As described above, reconfigureWithSyncFailureSCG may be set in a manner that distinguishes the RAN of the SCG.

### (3.4) SCG Quality Information

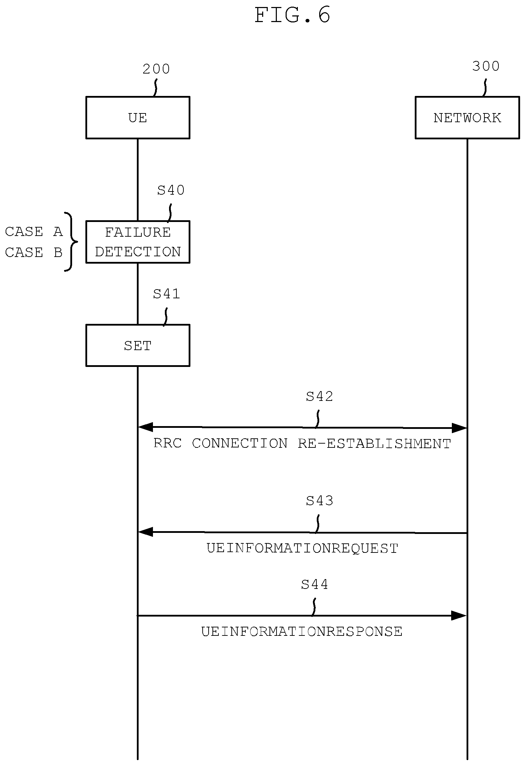

Quality information about SCG is described below. In Fig. 6, the network 300 may be NG RAN 30 or E-UTRAN 20.

As shown in Fig. 6, in step S40, the UE 200 detects the RLF in the DC. Possible causes of RLF include (A) SCG Failure (expiration of T310 of the SCG) and transmission to the MCG is not possible, and (B) MCG Failure (expiration of T310 of the MCG) and transmission to the SCG is not possible.

In step S41, the UE 200 stores information elements indicating quality information about the SCG as variables. For example, if the factor of RLF is (A), the UE 200 may set the information element indicating quality information about the SCG to sCGFailureInfo. If the factor of RLF is (B), the UE 200 may set the information element indicating quality information about the SCG to mCGFailureInfo.

In step S42, the UE 200 executes an RRC connection re-establishment with the network 300 to set up new cells and connections.

In step S43, the UE 200 receives a UEInformationRequest from the network 300. A UEInformationRequest may include an information element that explicitly requests quality information.

In step S44, the UE 200 transmits the UEInformationResponse to the network 300. The UEInformationResponse includes information elements indicating quality information about the SCG. As described above, information elements indicating quality information about the SCG may be set in a manner that distinguishes the RAN of the SCG or MCG.

### (3.5) DAPS Handover

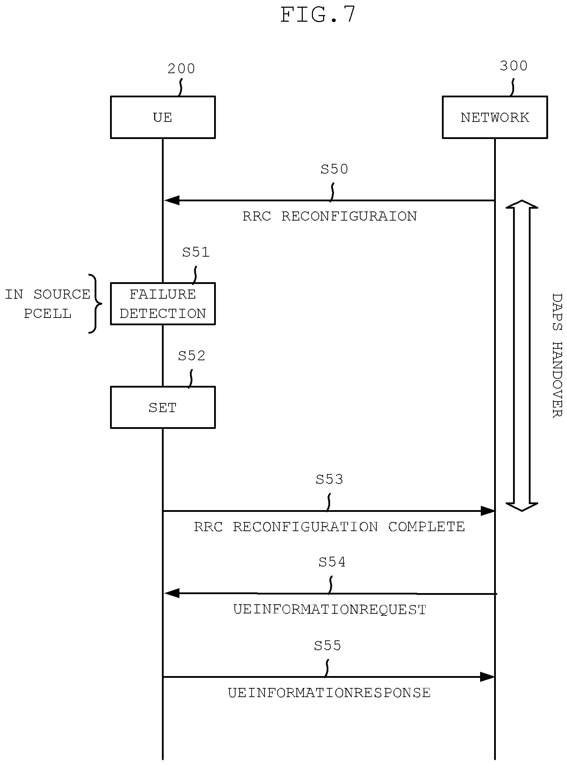

The DAPS handover is described below. In Fig. 7, the network 300 may be NG RAN 30.

In step S50, the UE 200 receives an RRC Reconfiguration message from the network 300. The RRC Reconfiguration message may include an information element for performing a DAPS handover.

In step S51, the UE 200 detects a link failure (RLF) of the source PCell.

In step S52, the UE 200 sets the identification information of the source PCell as a variable.

In step S53, the UE 200 transmits an RRC Reconfiguration Complete message to the network 300 (target cell). This completes the DAPS handover. Here, the RRC Reconfiguration Complete message may include an information element (rlf-InfoAvailable) that indicates whether the source PCell's identity has been set due to the source PCell's RLF.

In step S54, the UE 200 receives a UEInformationRequest from the network 300. The UEInformationRequest may include an information element that explicitly requests the identity of the source PCell. The network 300 may transmit a UEInformationRequest to the UE 200 if the information element (rlf-InfoAvailable) is included in the RRC Reconfiguration Complete message.

In step S55, the UE 200 transmits the UEInformationResponse to the network 300. The UEInformationResponse includes the identity of the source PCell.

Fig. 7 illustrates a case in which the identification information of the source PCell is included in the UEInformationResponse. However, the embodiment is not limited to this. The identity of the source PCell may be included in the RRC Reconfiguration Complete message in step S53.

### (3.6) NPN connectivity failure

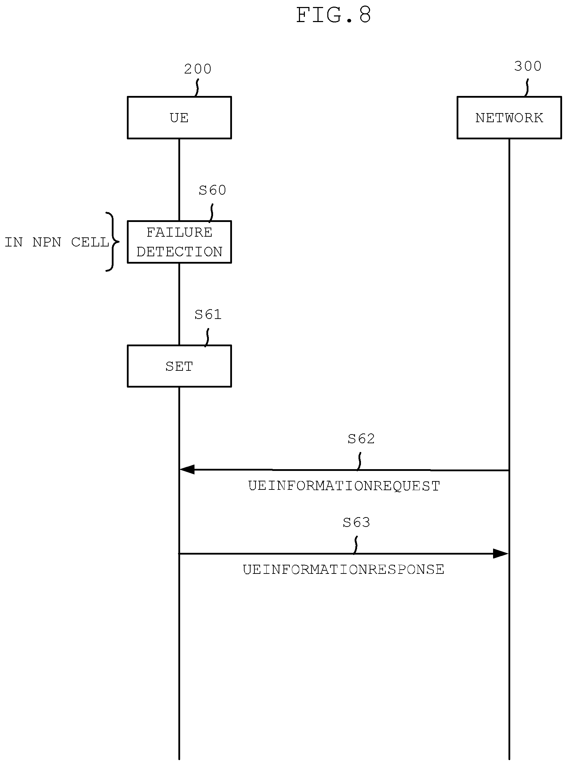

NPN connection failures are described below. In Fig. 8, the network 300 may be NG RAN 30.

As shown in Fig. 8, in step S60, the UE 200 detects a connection failure of a cell included in the NPN. Connectivity failures may include radio link failures (RLF) or failures in RACH procedures (RACH Failure).

In step S61, the UE 200 sets identification information about the NPN as a variable.

In step S62, the UE 200 receives a UEInformationRequest from the network 300. The UEInformationRequest may include an information element that explicitly requests identifying information about the NPN.

In step S63, the UE 200 transmits the UEInformationResponse to the network 300. The UEInformationResponse includes identification information (NPN-Identity) about the NPN.

### (4)Example configuration of information elements

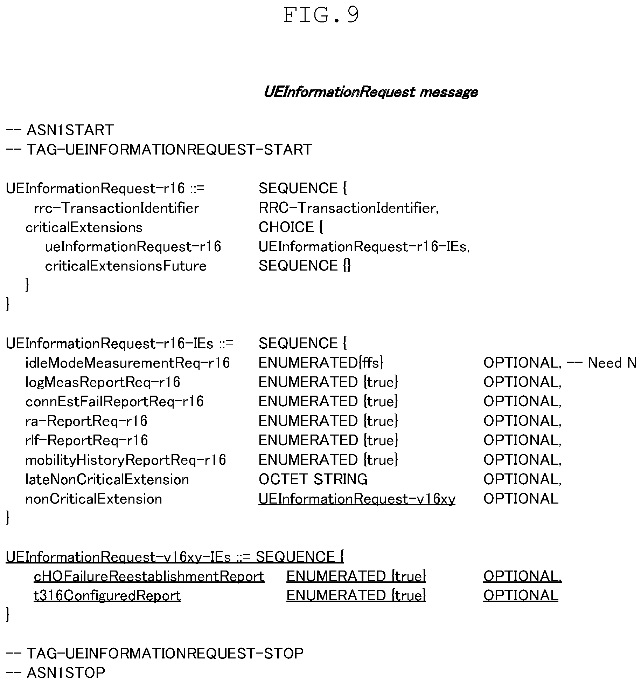

Fig. 9 shows an example of the configuration of the information elements of the UEInformation Request. As shown in Fig. 9, the UEInformation Request may include the "cHOFailureReestablishment mentReport," "T316 Configured Report" described above.

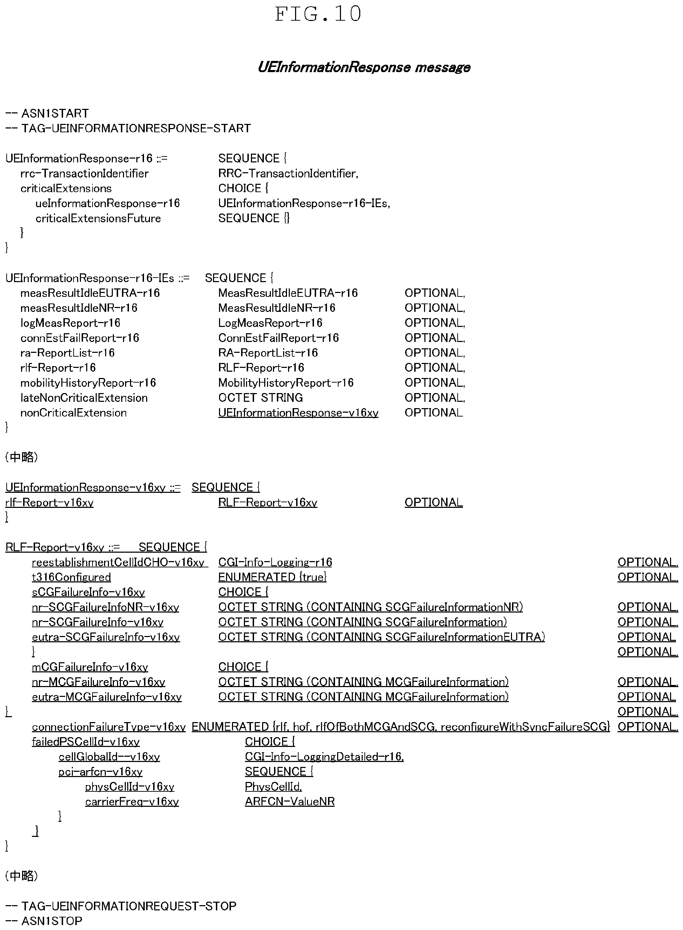

Fig. 10 shows an example of the configuration of the information elements of the UEInformationResponse. As shown in Fig. 10, the UEInformationResponse may include "reestablishmentCellIdCHO," "T316 Configured," "sCGFailureInfo," "mCGFailureInfo," "connectionFailureType," and "failedPSCellId."

### (5)Operational effects

In the embodiment, messages about connection failures can be appropriately sent assuming various newly introduced technologies (CHO, MCG Recovery, DAPS Handover, etc.). Therefore, the SON or MDT can be properly operated.

### (6)Other Embodiments

Although the above description of the embodiment is not limited to the description of the embodiment, it is obvious to those skilled in the art that various modifications and improvements are possible.

In the embodiment, CHO is illustrated as an example of conditional reconfiguration. However, the embodiment is not limited to this. The conditional reconfiguration may be a CPC (Conditional PCell Change). The PSCell may also be changed in the CPC without transmitting an RRC Re-establishment Request message to the network 300.

In addition, the block diagram (Fig. 2) used for the explanation of the above embodiment shows a block of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmitting unit (transmission unit) or transmitter. In either case, as described above, the implementation method is not particularly limited.

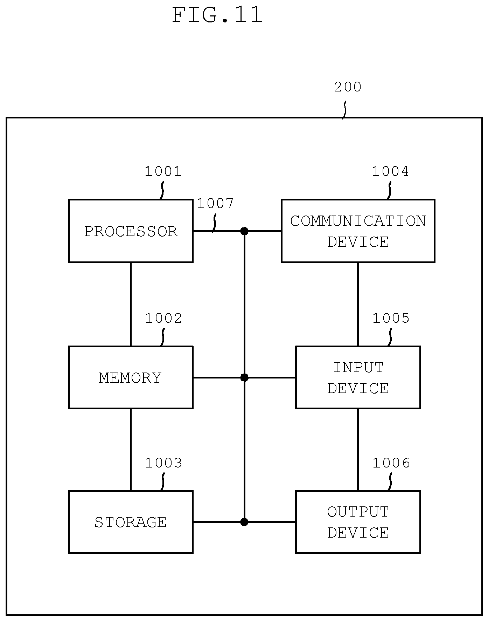

In addition, the aforementioned UE 200 (the device) may function as a computer that performs processing of the radio communication method of this disclosure. Fig. 11 shows an example of the eNB 100A hardware configuration. As shown in Fig. 11, the eNB 100A may be configured as a computer device including a processor 1001, a memory 1002, a storage 1003, a communication device 1004, an input device 1005, an output device 1006 and a bus 1007, etc.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Fig. 2) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001, for example, operates an operating system to control the entire computer. The processor 1001 may consist of a central processing unit (CPU) including interfaces to peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. The memory 1002 can store programs (program code), software modules, etc., that can execute a method according to one embodiment of this disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. Bus 1007 may be configured using a single bus or different buses between devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

In addition, notification of information is not limited to the mode/embodiment described in this disclosure and may be made using other methods. For example, notification of information may be performed by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, for example, an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative sequence to present elements of various steps and is not limited to the specific sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in this disclosure may be used alone, in combination, or switched over as practice progresses. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, airplanes, etc.), an unmanned mobile body (For example, drones, self-driving cars, etc.) or a robot (manned or unmanned). At least one of a base station and a mobile station can be a device that does not necessarily move during the communication operation. For example, at least one of a base station and a mobile station may be an Internet of Things (IoT) device such as a sensor.

In addition, base stations in this disclosure may be read as mobile stations (user terminal, hereinafter the same). For example, each aspect/embodiment of this disclosure may be applied to a configuration in which communication between a base station and a mobile station is replaced by communication between multiple mobile stations (For example, it may be called Device-to-Device (D2D), Vehicle-to-Everything (V2X), etc.). In this case, the mobile station may have the function of the base station. In addition, phrases such as "up" and "down" may be replaced with phrases corresponding to communication between terminals (For example, "side"). For example, terms an uplink channel, a downlink channel, or the like may be read as a side channel.

Similarly, mobile stations in this disclosure may be read as base stations. In this case, the base station may have the function of the mobile station. A radio frame may be composed of one or more frames in the time domain. Each frame or frames in the time domain may be referred to as a subframe. A subframe may be further configured by one or more slots in the time domain. The subframe may have a fixed length of time (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in units of time larger than a minislot may be called a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe (1 ms) in an existing LTE, may have a duration shorter than 1 ms (For example, 1-13 symbols), or may have a duration longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. In addition, the number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 E-UTRAN
30 NG RAN
40 Core network
50 E-SMLC
100A eNB
100B gNB
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication device
1005 input Device
1006 output Device
1007 bus

## Claims

1. A terminal comprising:
a control unit that sets cell identification information of a target cell as a variable when a reconfiguration procedure of the target cell is performed in conditional reconfiguration; and
a transmission unit that transmits a message including the cell identification information set as the variable to the network.

2. A terminal comprising:
a control unit that sets, as a variable, an information element identifying whether or not a recovery procedure of a first cell group using a second cell group has been configured, when a link failure of the first cell group occurs in a dual connectivity using the first cell group and the second cell group; and
a transmission unit that transmits a message including the information element set as the variable to the network.

3. A terminal comprising:
a control unit that sets an information element indicating the failure type as a variable, when a synchronization failure of a second cell group occurs and transmission to a first cell group is stopped in a dual connectivity using the first cell group and the second cell group; and
a transmission unit that transmits a message including the information element set as the variable to the network.

4. A terminal comprising:
a control unit that sets an information element indicating quality information about a second cell group as a variable, when a link failure of any one of a first cell group and a second cell group occurs and transmission to the first cell group and the second cell group are not possible in a dual connectivity using the first cell group and the second cell group; and
a transmission unit that transmits a message including the information element set as the variable to the network.

5. A terminal comprising:
a control unit that sets an information element indicating a link failure in a specific handover as a variable, when the link failure in the specific handover occurs in the specific handover from a source cell to a target cell;
a transmission unit that transmits a message including the information element set as the variable to the network; and
the specific handover is a handover performed while the link of the source cell is maintained.

6. A terminal comprising:
a control unit that sets identification information related to a non-public mobile communication network as a variable when a connection failure occurs in a cell included in the non-public mobile communication network; and
a transmission unit that transmits a message including the identification information set as the variable to the network.
